# EUROPÄISCHE PATENTANMELDUNG

(11) **EP 0 572 819 A1**
(43) Veröffentlichungstag der Anmeldung: **08.12.1993**
(21) Anmeldenummer: 93107572.5
(22) Anmeldetag: 10.05.1993
(51) Int. Cl.: B21J 15/28, B21J 15/06, G01L 5/00

(54) **Verfahren zum Bestimmen der Abreisskraft des Zugdorns eines Blindniets und zugehöriges Blindnietsetzgerät**

(30) Priorität: 29.05.1992 DE 4217901
(71) Anmelder: ALFRED HONSEL NIETEN- UND METALLWARENFABRIK GMBH & CO., W-5758 Fröndenberg/Ruhr (DE)
(72) Erfinder: Jagiella, Waldemar, W-5840 Schwerte-Ergste (DE); Sonntag, Günter, W-5758 Fröndenberg (DE)
(74) Vertreter: Grünecker, Kinkeldey, Stockmair & Schwanhäusser Anwaltssozietät

(57) **Zusammenfassung**

Die Erfindung betrifft ein Blindnietsetzwerkzeug 1 mit einer Kraftmeßeinrichtung zum Bestimmen der Abreißkraft des Zugdornes 3 eines Blindniets 4. Hierzu ist vorgesehen, daß in einer Druckluftleitung (10) ein Präzisionsmanometer angeordnet ist, mit dem der für die Betätigung des Zugmechanismus erforderliche Druck gemessen wird. Beim Abreißen des Zugdornes 3 des Blindniets 4 entsteht ein Druckmaximum, das mit Hilfe eines Spitzenwertdetektors erfaßt und zur Anzeige gebracht wird. Das ermittelte Druckmaximum kann mit vorgegebenen Sollwerten verglichen werden, wonach dann entschieden werden kann, ob der Niet in Ordnung ist oder neu gesetzt werden muß.

## Beschreibung

Die Erfindung bezieht sich auf ein Verfahren zum Bestimmen der Abreißkraft des Zugdornes eines mit Hilfe eines im Zugmechanismus einen fluidbetätigbaren Kolben aufweisenden Blindnietsetzgerätes gesetzten Blindniets sowie auf ein Blindnietsetzgerät zum Durchführen eines solchen Verfahrens.

Aus der EP-A- 454890 ist bereits ein Blindnietsetzgerät bekannt, das im Zugmechanismus eine Kraftmeßeinrichtung aufweist, mit der die auf den Zugdorn eines Blindniets ausgeübte Zugkraft gemessen werden kann. Hierzu wird direkt am Zugmechanismus ein Dehnungsmeßstreifen angebracht, der als Widerstandselement in einer "Wheatston"-Brücke verschaltet ist, so daß durch eine Längendehnung des Zugmechanismus eine Widerstandsänderung im Dehnungsmeßstreifen und damit eine Spannungsänderung erreicht wird, die proportional zur aufgebrachten Zugkraft ist.

Die bekannte Kraftmeßeinrichtung, die auch bei hydraulisch oder pneumatisch betriebenen Blindnietsetzwerkzeugen Anwendung findet, arbeitet zufriedenstellend und gestattet die Überwachung des Setzvorganges von Blindnieten, was insbesondere immer dann wichtig ist, wenn man die "Blindseite" nicht einsehen kann.

Allerdings erscheint es wünschenswert, die Kraftmeßeinrichtung einerseits konstruktiv zu vereinfachen und andererseits ein Verfahren zur Verfügung zu stellen, das die Handhabung des Blindnietsetzgerätes noch weiter vereinfacht.

Diese Aufgabe wird bezüglich des Verfahrens erfindungsgemäß dadurch gelöst, daß man zumindest im Zeitpunkt des Abreißen des Zugdornes unter Berücksichtigung der wirksamen Kolbenfläche den Fluiddruck mißt.

Hinsichtlich des Blindnietsetzgerätes ist dazu erfindungsgemäß vorgesehen, daß die Kraftmeßeinrichtung einen Fluidsensor zum Messen des auf den Kolben wirkenden Fluiddrucks umfaßt.

Der Vorteil dieser Lösung liegt darin, daß am Zugmechanismus des Blindnietsetzgerätes keinerlei Änderungen mehr vorgenommen werden müssen. Der Drucksensor kann vielmehr mit Abstand vom Zugmechanismus, z.B. auch in einem separaten Gehäuse oder in der Fluidleitung angebracht sein, so daß das Gewicht des Blindnietsetzgerätes, das die Bedienperson während des Arbeitens in der Hand hat, nicht durch die Kraftmeßeinrichtung erhöht wird. Ferner wird die Störanfälligkeit der Kraftmeßeinrichtung vermindert, da diese nun an nicht mechanisch belasteten Teilen vorgesehen sein kann.

Obgleich es möglich ist, den Fluiddruck während des gesamten Setzvorganges zu messen, und, nach Umrechnung unter Berücksichtigung der Kolbenflächen und Übersetzungsverhältnisse als Kraft auf eine Anzeige darzustellen, reicht es in aller Regel aus, wenn man den Fluiddruck während des gesamtes Setzvorganges mißt, wobei man das im Druckverlauf erste Maximum als den für die Abreißkraft maßgebenden Fluiddruck bestimmt. Hierbei macht man sich folgendes Druckverhalten beim Setzen von Blindnieten mittels fluidbetätigter Blindnietsetzgeräte zunutze. Während des Setzvorganges steigt der Druck im Fluidsystem stetig an, bis der Zugdorn des Blindniets abreißt. In diesem Moment kann der fluidbetätigbare Kolben des Zugmechanismus ohne nennenswerten Widerstand bis zum Anschlag durchfahren. Aufgrund des beim Durchfahren stark verminderten Widerstandes fällt der Druck in der Fluidleitung unmittelbar nach dem Abreißen des Zugdornes stark ab. Dieser plötzliche und starke Druckabfall gibt ein sicheres Signal für den Zeitpunkt zur Messung des Fluiddrucks, der die Abreißkraft des Zugdornes repräsentiert. Somit läßt sich eine äußerst genaue und von Störeinflüssen unabhängige Kraftmessung erreichen.

Gemäß einer bevorzugten Ausführungsform der Erfindung ist der Drucksensor als ein den Druck in ein elektrisches Spannungs- oder Stromsignal umsetzendes elektronisches Präzisionsmanometer ausgebildet. Diese elektrischen Größen können in einer elektronischen Schaltung der Kraftmeßeinrichtung zur Anzeige und Auswertung der Abreißkraft verwendet werden.

In diesem Zusammenhang wird bevorzugt, die Kraftmeßeinrichtung zum Erfassen des ersten Druckmaximums einen Spitzenwertdetektor aufweist. Mit einem solchen, in der Elektronik weit verbreiteten Spitzenwertdetektor läßt sich das Druckmaximum auf einfache Weise bestimmen.

Die Kraftmeßeinrichtung kann ferner auch einen Speicher aufweisen, indem die zum Zeitpunkt des ersten Druckmaximums gemessenen Werte des Fluiddrucks abgelegt werden. Auf diese Weise ist es möglich, die Druckmaxima verschiedener Setzvorgänge miteinander zu vergleichen, um so Ausreißer, also zu hohe oder zu geringe Druckmaxima zu erkennen. Solche Ausreißer können dann durch akustische oder optische Mittel zur Anzeige gebracht werden.

Bevorzugt wird auch, wenn die Kraftmeßeinrichtung ein Display aufweist, in dem die gemessenen Druckwerte zur Anzeige gebracht werden. Gegebenenfalls kann die Kraftmeßeinrichtung auch einen Mikroprozessor aufweisen, in dem eine Tabelle abgelegt ist, die die Druckwerte bestimmten Kraftwerten zuordnet, so daß die zugehörigen Kraftwerte zur Anzeige gebracht werden.

Besonders bevorzugt wird, wenn bei einem pneumatisch oder pneumatisch/hydraulisch betriebenen Blindnietsetzgerät der Drucksensor im Pneumatiksystem hinter einem Druckminderer angeordnet ist. Auf diese Weise lassen sich Druckschwankungen, die bei Druckluftanlagen größerer Hallen, z.B. durch Einschalten von Kompressoren oder dergleichen auftreten können, eliminieren.

Gemäß einer vorteilhaften Weiterbildung der Erfindung kann die Kraftmeßeinrichtung in einem vom Zugmechanismus gesonderten Gehäuse angeordnet sein, das mit dem Zugmechanismus des Blindnietsetzgerätes über eine Fluidleitung verbunden ist. Das hat den Vorteil, daß zum einen der Teil des Blindnietsetzgerätes, der von der Bedienperson in der Hand gehalten wird, durch die Kraftmeßeinrichtung gewichtsmäßig nicht beschwert wird. Andererseits kann die Kraftmeßeinrichtung einfach durch Lösen der Fluidleitung auch an andere Blindnietsetzgeräte angeschlossen werden, weil ja an den Zugmechanismen der anderen Blindnietsetzgeräte keine bauliche Veränderung vorzunehmen ist. In diesem Zusammenhang ist es besonders günstig, wenn die Kraftmeßeinrichtung Abgleichmittel aufweist, mit denen die Kraftmeßeinrichtung an Zugmechanismen mit unterschiedlichen Kolbenflächen und Übersetzungsverhältnissen anpaßbar ist. Auf diese Weise ist es möglich, verschiedene Blindnietsetzgeräte vorrätig zu haben, die alle, nach Umstecken der Fluidleitung und nach einem entsprechenden Abgleich mit derselben Kraftmeßeinrichtung betrieben werden können.

Im folgenden wird ein Ausführungsbeispiel der Erfindung anhand einer Zeichnung näher erläutert. Es zeigen:
- Fig. 1: in einer schematischen Darstellung ein pneumatisch betriebenes Blindnietsetzgerät mit Kraftmeßeinrichtung,
- Fig. 2: eine schematische Darstellung des Funktionsprinzips des Blindnietsetzgerätes aus Fig. 1 und
- Fig. 3: eine graphische Darstellung des Druckverlaufs, aufgetragen über den Weg des Zugmechanismus.

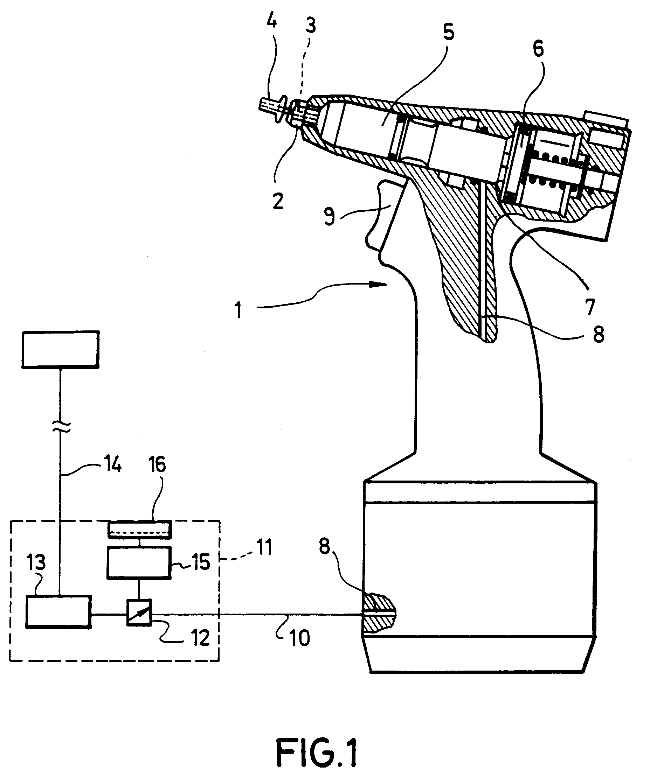

Fig. 1 zeigt ein zunächst handelsübliches, pneumatisch betriebenes Blindnietsetzwerkzeug 1, in teilweise aufgeschnittener Darstellung. Erkennbar ist ein in das Mundstück 2 mit seinem Zugdorn 3 eingesetzter Blindniet 4. Der in gestrichelter Linie dargestellte Zugdorn 3 ragt in einen Zugmechanismus hinein, der, der Übersichtlichkeit halber, vereinfacht durch ein verschiebbar im Gehäuse des Blindnietsetzwerkzeuges 1 angeordnetes Zugrohr 5, dargestellt ist. An dem dem Mundstück 2 gegenüberliegenden Ende des Rohres weist dieses einen Kolben 6 auf, der in einem Druckraum 7 in Richtung des Doppelpfeiles hin- und herbewegbar ist, und zwar zusammen mit dem Zugrohr 5.

Zu dem Druckraum 7 führt ein Druckluftkanal 8, in dem ein, nicht näher dargestelltes, Betätigungsventil vorgesehen ist, welches durch den Auslösetaster 9 betätigt wird.

Soweit ist das Blindnietsetzwerkzeug handelsüblich und daher bekannt. An den Druckluftkanal 8 ist nun eine flexible Druckluftleitung 10 angeschlossen, die zu einem separaten Gehäuse 11 führt, in welchem ein elektronisches Präzisionsmanometer 12 untergebracht ist. Dem Präzisionsmanometer vorgeschaltet ist eine pneumatische Wartungseinheit 13, mit einem Wasserabscheider, einem Nebelöler und insbesondere einem Druckminderer, der dafür sorgt, daß hinter der Wartungseinheit 13 ein von Schwankungen im Druckluftnetz unabhängiger Druckpegel vorherrscht. Die Wartungseinheit 13 selbst ist wiederum über eine flexible Druckluftleitung 14 mit einer Druckluftquelle verbunden, z.B. dem Druckluftnetz der Werkhalle.

Das elektronische Präzisionsmanometer 12 ist bei dem hier gezeigten Ausführungsbeispiel über einen Analogdigitalwandler mit einem Mikroprozessor 15 verbunden, der über eine Speichereinheit verfügt, und der selbst wiederum mit einem Anzeigendisplay 16 verbunden ist. Mit Hilfe des Mikroprozessors und des Anzeigendisplays lassen sich die in der Druckluftleitung 10, und damit im Druckluftkanal 8 und im Druckraum 7 gemessenen Drücke rechnerisch umsetzen und darstellen. Der Mikroprozessor 15 weist hierzu insbesondere einen Spitzenwertdetektor auf, mit dem es möglich ist, Maxima im Druckverlauf zu erkennen und die zugehörigen Druckwerte festzuhalten.

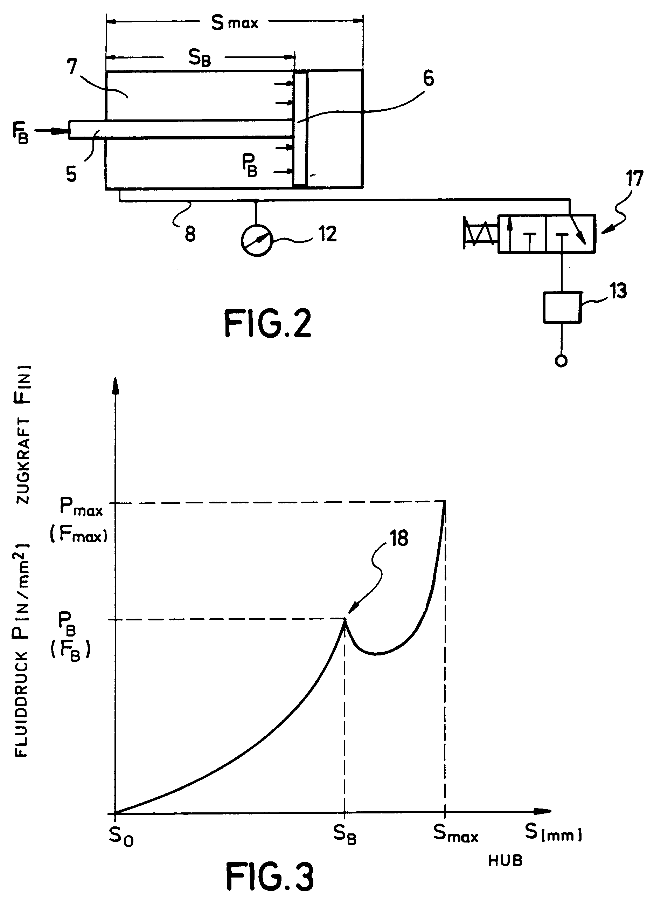

Unter Zuhilfenahme der Fig. 2 und 3 wird nun die Funktionsweise des Blindnietsetzwerkzeuges 1 aus Fig. 1 näher erläutert. In Fig. 2 sind funktionsgleiche Bauteile genauso bezeichnet wie in Fig. 1.

Wenn das Ventil 17 in die rechte Stellung verschoben wird, kann Druckluft aus der Wartungseinheit 13 über den Druckluftkanal 8 in den Druckraum 7 des Blindnietwerkzeuges einströmen. Dabei bewegt sich der Kolben 6 zusammen mit dem Zugrohr 5 nach rechts. Da bei dieser Bewegung der Zugdorn 3 des Blindniets 4 bereits eingezogen wird, steigt die benötigte Kraft F und damit auch der benötigte Druck P während des Hubs S des Kolbens 6 an, wie aus Fig. 3 ersichtlich ist. Der Druck erreicht sein Maximum P_{B} (B = Bruch), wenn der Zugdorn 3 des Blindniets 4 abreißt. Diese Stelle ist in Fig. 3 mit dem Bezugszeichen 18 bezeichnet. Da der Kolben 6 anschließend den restlichen Hub praktisch ohne Widerstand zurücklegen kann, ist hinter der Stelle 18 ein steiler Druckabfall zu verzeichnen, der es ermöglicht, diese Stelle mit Hilfe des in den Mikroprozessor 15 integrierten Spitzenwertdetektors zu erfassen. Aufgrund des somit ermittelten Druckwertes P_{B} von den bekannten Kolbenflächen läßt sich die Abreißkraft F_{B} bestimmen und mit dem Anzeigendisplay 16 zur Anzeige bringen.

Für den praktischen Betrieb dieses Blindnietsetzgerätes lassen bestimmte Sollbereiche für die Abreißkraft vorgeben, wobei beim Verlassen dieser Bereiche ein Signal ertönt oder angezeigt wird. Es ist mit Hilfe des Mikroprozessors 15 allerdings möglich, daß dieser sich aufgrund der bei den Setzarbeiten ermittelten Druckwerte einen Sollbereich für die Abreißkraft bestimmt, ohne daß ein solcher Sollwert von Hand vorgegeben werden muß.

Obgleich das oben beschriebene Ausführungsbeispiel eine vom eigentlichen Blindnietsetzwerkzeug getrennt untergebrachte Kraftmeßeinrichtung vorsieht, ist es auch denkbar, daß das Präzisionsmanometer z.B. unmittelbar am Druckraum oder am Druckluftkanal angebracht ist. Anstelle einer sich an das Druckluftmanometer anschließenden Auswerteeinheit kann es für einfache Anwendungen auch ausreichen, wenn das Manometer eine Analoganzeige aufweist, die den kontinuierlich gemessenen Druck anzeigt.

Bei elektrisch betätigbaren Blindnietsetzgeräten ist es auch möglich, in analoger Weise den Verlauf der sich beim Setzvorgang verändernden Stromaufnahme zu messen und mit Hilfe der Spannung, sowie Übersetzungsverhältnisse in die Zugkraft und damit auch die Abreißkraft umzurechnen. Das erste Stromaufnahmemaximum repräsentiert dabei ebenfalls die Abreißkraft des Zugdorns des Blindnietes.

## Patentansprüche

1. Verfahren zum Bestimmen der Abreißkraft des Zugdornes eines mit Hilfe eines im Zugmechanismus einen fluidbetätigbaren Kolben aufweisenden Blindnietsetzgerätes gesetzten Blindniets, **dadurch gekennzeichnet**, daß man zumindest im Zeitpunkt des Abreißens des Zugdorns unter Berücksichtigung der wirksamen Kolbenfläche den Fluiddruck mißt.

2. Verfahren nach Anspruch 1, **dadurch gekennzeichnet,** daß man den Fluiddruck während des gesamten Setzvorganges mißt, wobei man das im Druckverlauf erste Maximum (18) als den für die Abreißkraft maßgebenden Fluiddruck bestimmt.

3. Blindnietsetzgerät zum Durchführen des Verfahrens nach Anspruch 1 oder 2, mit einem einen fluidbetätigbaren Kolben (6) aufweisenden Zugmechanismus für den Zugdorn (3) eine Blindniets (4) und mit einer Kraftmeßeinrichtung (12, 15, 16) zum Bestimmen der Zugkraft des Zugmechanismus, **dadurch gekennzeichnet,** daß die Kraftmeßeinrichtung einen Drucksensor (12) zum Messen des auf den Kolben (6) wirkenden Fluiddrucks umfaßt.

4. Blindnietsetzwerkzeug nach Anspruch 3, **dadurch gekennzeichnet**, daß der Drucksensor als ein den Druck in ein elektrisches Spannungs- oder Stromsignal umsetzendes elektronisches Präzisionsmanometer (12) ausgebildet ist.

5. Blindnietsetzwerkzeug nach Anspruch 3 oder 4, **dadurch gekennzeichnet**, daß die Kraftmeßeinrichtung zum Erfassen des ersten Druckmaximums (18) einen Spitzenwertdetektor (Mikroprozessor 15) aufweist.

6. Blindnietsetzwerkzeug nach einem der Ansprüche 3 bis 5, **dadurch gekennzeichnet**, daß die Kraftmeßeinrichtung einen Speicher (Mikroprozessor 15) aufweist, in dem die zum Zeitpunkt des ersten Druckmaximums (18) gemessenen Werte des Fluiddrucks abgelegt werden.

7. Blindnietsetzwerkzeug nach einem der Ansprüche 3 bis 6, **dadurch gekennzeichnet**, daß die Kraftmeßeinrichtung ein Display (16) aufweist, in dem die gemessenen Druckwerte zur Anzeige gebracht werden.

8. Blindnietsetzwerkzeug nach einem der Ansprüche 3 bis 7, **dadurch gekennzeichnet**, daß bei einem pneumatisch oder pneumatisch/hydraulisch betriebenen Blindnietsetzwerkzeug der Drucksensor (12) im Pneumatiksystem hinter einem Druckminderer (Wartungseinheit 13) angeordnet ist.

9. Blindnietsetzwerkzeug nach einem der Ansprüche 3 bis 8, **dadurch gekennzeichnet**, daß die Kraftmeßeinrichtung in einem vom Zugmechanismus gesonderten Gehäuse (11) angeordnet ist, das mit dem Zugmechanismus des Blindnietsetzgerätes (1) über eine Fluidleitung (10) verbunden ist.

10. Blindnietsetzwerkzeug nach einem der Ansprüche 3 bis 9, **dadurch gekennzeichnet**, daß die Kraftmeßeinrichtung Abgleichmittel aufweist, mit denen die Kraftmeßeinrichtung an Zugmechanismen mit unterschiedlichen Kolbenflächen und Übersetzungsverhältnissen anpaßbar ist.

11. Verfahren zum Bestimmen der Abreißkraft des Zugdornes eines mit Hilfe eines elektrisch betätigbaren Blindnietsetzgerätes gesetzten Blindniets,
**dadurch gekennzeichnet**, daß man zumindest im Zeitpunkt des Abreißens des Zugdornes über die Stromaufnahme des Blindnietsetzgerätes die benötigte elektrische Leistung mißt.
